# EUROPEAN PATENT APPLICATION

(11) **EP 4 793 835 A1**
(43) Date of publication of application: **19.08.2026**
(21) Application number: 25192770.3
(22) Date of filing: 30.07.2025
(51) Int. Cl.: G06N 3/08, G06F 12/0862, G06N 3/084

(54) **METHOD AND DEVICE FOR TRAINING DEEP LEARNING RECOMMENDATION MODEL**

(30) Priority: 12.02.2025 CN 202510156757
(71) Applicant: Samsung Electronics Co., Ltd., Suwon-si, Gyeonggi-do 16677 (KR)
(72) Inventor: FENG, Haonan, Xi'an hi tech Zone, Shaanxi Province (CN); MA, Kaige, Xi'an hi tech Zone, Shaanxi Province (CN); LI, Yutao, Xi'an hi tech Zone, Shaanxi Province (CN); KIM, Jun, 16677 Suwon-si, Gyeonggi-do (KR); LIM, Seungwoo, 16677 Suwon-si, Gyeonggi-do (KR); KIM, Yeonjae, 16677 Suwon-si, Gyeonggi-do (KR)
(74) Representative: Kuhnen & Wacker Patent- und Rechtsanwaltsbüro PartG mbB

(57) **Abstract**

Methods, devices, and systems for training a deep learning recommendation model (DLRM), include: offloading (S101) one or more storage tables to a memory device; training (S102) a DLRM based on training data, wherein during the training, a storage table prefetched from the memory device is loaded according to a training phase; and storing (S103) feature data obtained during the training into the loaded storage table.

## Description

### BACKGROUND

### 1. Field

The present disclosure relates to a field of computer technology, and more specifically, to a method and a device for training a deep learning recommendation model.

### 2. Description of Related Art

The sizes of machine learning models are growing at a very fast speed, not only for a natural language processing (NLP) model such as a generative pre-trained transformer (GPT) model, but also for a recommendation model like a deep learning recommendation model (DLRM). The DLRM may be a large-scale recommendation model that may be used in data-centric applications such as search, social media, and entertainment.

The DLRM may be much larger than other models such as a deep neural network (DNN). A storage table, which may be referred to as, for example, an embedding table (EMB), may take up a large amount of memory, and store the features of the raw data during training, and a total size thereof may range from a gigabyte (GB) to tens of terabytes (TB) or more. Because it may be desirable to store the storage table (e.g., the EMB table) in a high bandwidth memory (HBM) in the training process, a consumer-grade graphics processing unit (GPU) may be unable to train the DLRM because it may not be able to store such massive storage tables (e.g., EMB tables). These massive storage tables (e.g., EMB tables) may be difficult deploy in a single resource-limited GPU.

In a first related scheme, all of the storage tables (e.g., EMB tables) may be deployed in a dynamic random access memory (DRAM), and when loss of a storage table (e.g., an EMB table) occurs during the training process, a central processing unit (CPU) may transmit the storage table (e.g., the EMB table) to the GPU. However, because the storage table (e.g., the EMB table) may require a large amount of memory, using only the DRAM may make these solutions very costly. This may have a large influence on other applications that require large amounts of DRAMs.

In a second related scheme, all of the storage tables (e.g., EMB tables) may be deployed in multiple GPUs separately, and the multiple GPUs may run in parallel, which may divide the storage tables (e.g., EMB tables) into multiple parts and store them in the multiple GPUs separately, and one GPU may process only that part of the storage tables (e.g., EMB tables) stored in it. However, firstly, using multiple GPUs for training may increase cost; and secondly, assigning a same computation to multiple GPUs may waste the computational resources of the GPUs. In addition, the multiple GPUs may need to communicate with each other, which can hinder the computation of the GPUs. The more GPUs there are, the longer the communication time may be.

In a third related scheme, all of the storage tables (e.g., EMB tables) may be deployed in a solid state drive (SSD), which may allow the CPU to transmit a storage table (e.g., EMB table) to the GPU when the storage table (e.g., EMB table) is missing in the training process, like when deployed in DRAM. However, because the random access speed of the SSD may be nearly two orders of magnitude slower than that of the DRAM, it may take more time to train a large-scale DLRM, which may result in degraded training performance.

In a fourth related scheme, all of the storage tables (e.g., EMB tables) may be deployed in a caching DLRM (cDLRM). A look-ahead window may be set up in the CPU (e.g., in a DRAM) and a cache may be set up in the GPU (e.g., in an HBM). The look-ahead window may be a prefetching module for prefetching n batch-sized storage tables (e.g., EMB tables) and transmitting them to the cache of the GPU. After the current training iteration is end, the cDLRM may update the trained storage tables (e.g., EMB tables) to the CPU for the next possible use. However, (i) all of the prefetched storage tables (e.g., EMB tables) may be required to be transmitted to the GPU without additional parsing, and hot data may be transmitted repeatedly; (ii) prefetching by a single CPU may be inefficient, which may cause a significant time overhead; and (iii) the cDLRM may not take into account fluctuations in the training time of the DLRM, and may be unable to adapt to the training iterations of the model.

### SUMMARY

Example embodiments of the present disclosure provide a method and a device for training a deep learning recommendation model (DLRM), to reduce training time and increase training efficiency.

In accordance with an aspect of the disclosure, a method for training a deep learning recommendation model (DLRM) is performed by a first processor and includes: offloading one or more storage tables to a memory device; training a DLRM based on training data, wherein during the training, a storage table prefetched from the memory device is loaded according to a training phase; and storing feature data obtained during the training into the loaded storage table.

In accordance with an aspect of the disclosure, a method for training a DLRM, is performed by a second processor, and includes: prefetching a storage table from a memory device according to a training phase associated with training of a DLRM by a first processor, wherein the storage table is configured to store feature data obtained during the training; and based on the storage table being prefetched, transferring the prefetched storage table to the first processor.

In accordance with an aspect of the disclosure, a device for training a DLRM includes: a storage table offloading unit configured to offload one or more storage tables to a memory device; a model training unit configured to train a DLRM based on training data; a storage table loading unit configured to load a storage table prefetched from the memory device according to a training phase during the training of the DLRM; and a storage table update unit configured to store feature data obtained during the training into the loaded storage table.

In accordance with an aspect of the disclosure, a device for training a DLRM includes: a storage table prefetching unit configured to prefetch a storage table from a memory device according to a training phase associated with training of a DLRM by a first processor, wherein the storage table is configured to store feature data obtained during the training; a storage table transferring unit, configured to, based on the storage table being prefetched, transfer the prefetched storage table to the first processor.

In accordance with an aspect of the disclosure, a system for training a DLRM includes: a memory device; a first processor configured to: offload one or more storage tables to the memory device, train a DLRM based on training data, and load a storage table prefetched from the memory device according to a training phase, during the training of the DLRM; and a second processor configured to: prefetch the storage table from the memory device according to the training phase, and based on the storage table being prefetched, transfer the prefetched storage table to the first processor, wherein the first processor is further configured to store feature data obtained during the training into the loaded storage table.

In accordance with an aspect of the disclosure, a computer-readable storage medium stores instructions that, when executed by at least one processor, causes the at least one processor to: offload one or more storage tables to a memory device; train a DLRM based on training data, wherein during the training, a storage table prefetched from the memory device is loaded according to a training phase; and store feature data obtained during the training into the loaded storage table.

In accordance with an aspect of the disclosure, a computing device includes: at least one processor; and at least one memory storing instructions that, when executed by the at least one processor, causes the computing device to: offload one or more storage tables to a memory device; train a DLRM based on training data, wherein during the training, a storage table prefetched from the memory device is loaded according to a training phase; and store feature data obtained during the training into the loaded storage table.

Additional aspects and/or advantages of the general concept of the present disclosure will be partially explained in the following description, and still others will be clear from the description, or may be known through the implementation of the general concept of the present disclosure.

### BRIEF DESCRIPTION OF DRAWINGS

The above and other features of example embodiments of the present disclosure will become clearer through the following description in conjunction with the drawings that exemplarily illustrate embodiments, wherein:
FIG. 1A illustrates a flowchart of a method of training a deep learning recommendation model (DLRM) performed by a first processor according to an example embodiment of the present disclosure;
FIG. 1B illustrates a flowchart of a method of training a DLRM performed by a second processor according to an example embodiment of the present disclosure;
FIG. 2 illustrates a schematic diagram of a fine-grained lock according to an example embodiment of the present disclosure;
FIG. 3 illustrates a schematic diagram of a parallel lookup according to an example embodiment of the present disclosure;
FIG. 4A illustrates a block diagram of a device for training a DLRM according to an example embodiment of the present disclosure;
FIG. 4B illustrates a block diagram of a device for training a DLRM according to an example embodiment of the present disclosure;
FIG. 5 illustrates a schematic diagram of a system for training a DLRM according to an example embodiment of the present disclosure;
FIG. 6 illustrates a schematic diagram of a computing device according to an example embodiment of the present disclosure.

### DETAILED DESCRIPTION OF EXAMPLE EMBODIMENTS

Reference will be made in detail to example embodiments of the present disclosure, examples of which are illustrated in the drawings, wherein like reference numerals refer to like elements throughout the drawings. Some particular embodiments will be described below by reference to the accompanying drawings in order to explain aspects of the present disclosure.

As is traditional in the field, the embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the present scope. Further, the blocks, units and/or modules of the embodiments may be physically combined into more complex blocks, units and/or modules without departing from the present scope.

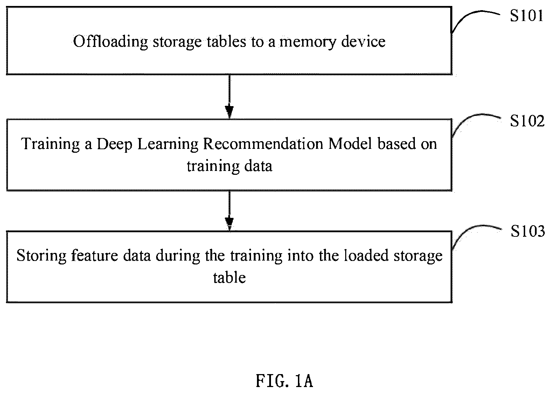

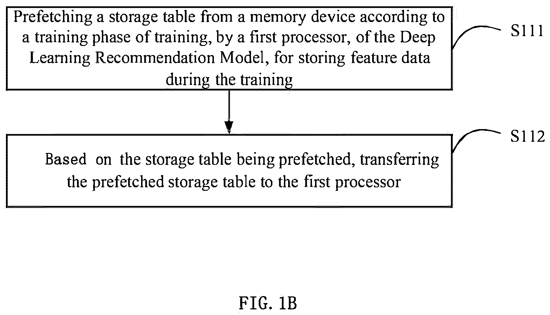

FIG. 1A illustrates a flowchart of a method of training a deep learning recommendation model (DLRM) performed by a first processor according to an example embodiment of the present disclosure. FIG. 1B illustrates a flowchart of a method of training a DLRM performed by a second processor according to an example embodiment of the present disclosure. According to embodiments, the first processor may be a graphics processing unit (GPU), and the second processor may be a central processing unit (CPU), but embodiments are not limited thereto.

Referring to FIG. 1A, at operation S101, storage tables may be offloaded to a memory device. Herein, after a DLRM may initialize the storage tables, and the first processor (e.g., GPU) may offload the storage tables from the first processor (e.g., GPU) to the memory device. Herein, training data may be loaded into the DLRM located in the first processor (e.g., GPU), before the training of the DLRM. The loading of the training data into the DLRM located in the first processor (e.g., GPU) may mean that the DLRM is to be trained based on the training data. Based on this, the storage tables may be offloaded to the memory device at operation S101.

In an example embodiment of the present disclosure, the memory device may include a Compute Express Link memory module based dynamic random access memory (CMM-D), and a storage table may include an embedding table.

At operation S102, the DLRM may be trained based on the training data. Herein, the training data may be used for the training of the DLRM.

In an example embodiment of the present disclosure, the method may further include, during the training of the DLRM, loading a storage table prefetched from the memory device according to a training phase, so that training time may be overlapped with transmission time, and the training of the DLRM in the GPU may be not slowed down, thereby reducing the training time.

In an example embodiment of the present disclosure, the loading of the storage table prefetched from the memory device according to the training phases may include: loading the prefetched storage table based on determining that the second processor has prefetched the storage table from the memory device according to the training phase, thereby enabling the loading of the storage table prefetched from the memory device.

At operation S103, feature data during the training may be stored into the loaded storage table. Herein, the feature data of the training process is stored into a corresponding storage table respectively.

Referring to FIG. 1B, at operation S111, a storage table may be prefetched from a memory device according to a training phase associated with training, by a first processor, of the DLRM, for storing feature data during the training.

In order for the training time to overlap with the transmission time of the storage table and to not slow down a training progress of the training of the DLRM, a prefetching parameter (e.g., but not limited to, a size of each prefetched batch, how many batches are to be prefetched, and so on) may be set in advance for each training phase in the present disclosure. Then, during a training process, for example, t batches of storage tables (e.g., memory tables) may be taken out from the memory device (e.g., a CMM-D) in advance according to the training phase, and may be transferred to the first processor (e.g., a GPU).

In an example embodiment of the present disclosure, the prefetching of the storage table may include prefetching a storage table that will be used in a next training phase of a current training phase (e.g., a next training phase that is subsequent to the current training phase) from the memory device. Herein, by prefetching the storage table that will be used in a next training phase during the current training phase, waiting may be reduced or eliminated between the training process (e.g., a main process) and a prefetching process such that the training time of the DLRM may overlap with the transmission time of the storage table and the training progress of the DLRM may be not slowed down.

A fine-grained lock may be designed in the present disclosure such that almost no waiting occurs between the main process for the training of the DLRM and the prefetching process for the storage table.

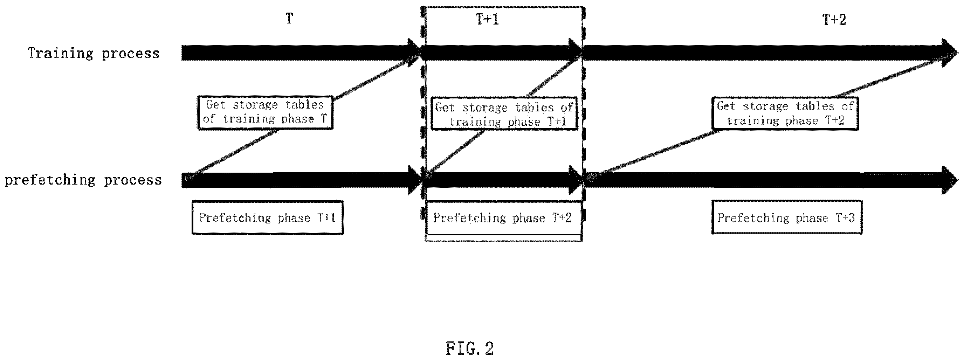

FIG. 2 illustrates a schematic diagram of a fine-grained lock according to an example embodiment of the present disclosure. As shown in FIG. 2, a training phase T of the training process may correspond to a prefetching phase T+1 of the prefetch process, a training phase T+1 of the training process may correspond to a prefetching phase T+2 of the prefetch process, and a training phase T+2 of the training process may correspond to a prefetching phase T+3 of the prefetch process. For example, while the first processor (e.g., a GPU) is executing the training phase T of the training process, the second processor (e.g., a central processor) may be executing the prefetching phase T+1 of the prefetching process to prefetch the storage tables that will be used in (or that correspond to) the training phase T+1 of the training process. While the first processor (e.g., a GPU) is executing the training phase T+1 of the training process, the second processor (e.g., a central processor) may be executing the prefetching phase T+2 of the prefetching process to prefetch the storage tables that will be used in (or that correspond to) the training phase T+2 of the training process. While the first processor (e.g., a GPU) is executing the training phase T+2 of the training process, the second processor (e.g., a central processor) may be executing the prefetching phase T+3 of the prefetching process to prefetch the storage tables that will be used in (or that correspond to) the training phase T+3 of the training process. For example, when T=1, a first training phase of the training process may correspond to a second prefetching phase of the prefetching process, and when T=0, a zero-th training phase of the training process may correspond to a first prefetching phase of the prefetching process. In some embodiments, the first prefetching phase of the prefetching process may be completed at or before a beginning of the training process (e.g., before the first training phase of the training process).

In an example embodiment of the present disclosure, the prefetching of the storage table that will be used in (or that corresponds to) the next training phase subsequent to the current training phase from the memory device may include: performing parallel lookup in the memory device for a plurality of storage tables that will be used in (or that correspond to) the next training phase; and prefetching the storage table from the memory device based on the plurality of storage tables. Herein, by performing a parallel lookup operation, the time use to perform the lookup operation may be saved, thereby overlapping the training time of the DLRM with the transmission time of the storage tables.

A lookup or lookup operation may refer to an operation on a storage table that involves looking up the storage table according to input data, usually one by one. The storage tables may be processed in parallel according to embodiments due to the independence of each storage table, which may mean for example that each storage table may be processed on its own and not influenced by other storage tables. Taking these characteristics into account, the present disclosure may relate to a parallel lookup, which may mean that a plurality of second processor cores (e.g., CPU cores) may be used to process the lookup operations of the storage tables.

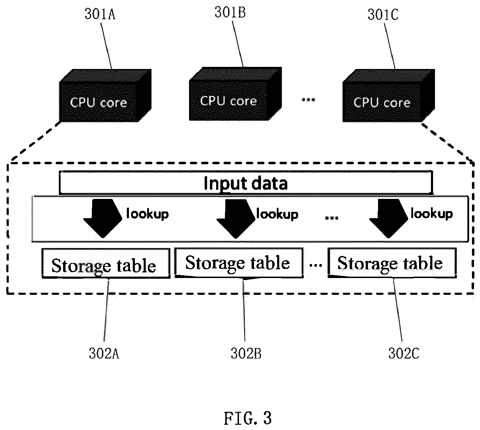

FIG. 3 illustrates a schematic diagram of a parallel lookup according to an example embodiment of the present disclosure. As shown in FIG. 3, a plurality of second processor cores 301 (e.g., illustrated as "CPU cores" in FIG. 3) may be used to look up a storage table corresponding to one of the plurality of input data, respectively and simultaneously. For example, when the plurality of second processor cores 301 (e.g., CPU cores) are used to look up the storage table (e.g., a memory table) corresponding to each of the three input data simultaneously, the following operations may be performed simultaneously: a first second processor core 301A (e.g., CPU core) may be used to look up a storage table corresponding to a first input data, a second second processor core 301B (e.g., CPU core) is used to look up a storage table 302B corresponding to a second input data 302B, and a third second processor core 301C (e.g., CPU core) is used to look up a storage table corresponding to a third input data 302C.

In an example embodiment of the present disclosure, the performing of the parallel lookup may include: determining corresponding data that will be used in (or that correspond to) the next training phase in the training data; and performing the parallel lookup in the memory device for each of the plurality of storage tables, based on at least a portion of the corresponding data. Herein, the parallel lookup may be performed based on the training data that will be used, thereby enabling the lookup of the storage tables.

For a training phase in which the training time is too short (e.g., less than average training time), in the present disclosure, a portion of the training data that will be used during that training phase may be randomly sampled, and a subsequent lookup storage table operation may be performed to adapt to the training time of the DLRM. In some embodiments, the portion may be, for example, 10% of the training data, but embodiments are not limited thereto. For a training phase in which a training time is not short (e.g., greater than or equal to the average training time), in the present disclosure, a subsequent lookup storage table operation may be performed using the training data that will be used in that training phase.

In an example embodiment of the present disclosure, the prefetching of the storage table from the memory device based on the plurality of storage tables may include: determining a first storage table having a heat less than a heat threshold in the plurality of storage tables; determining a second storage table having a proximity to the first storage table greater than or equal to a first proximity threshold; and prefetching the second storage table to replace the first storage table, based on the second storage table having a heat greater than or equal to the heat threshold. Herein, a hotter storage table may be used to replace a colder storage table, and the colder storage table may therefore not need to be transmitted.

In an example embodiment of the present disclosure, the heat indicates an access frequency of a storage table, and the heat threshold indicates a threshold for the access frequency of the storage table. For example, the heat may indicate the frequency that the storage table is prefetched or used. The more frequently one storage table is accessed, the higher the heat is; the less frequently one storage table is accessed, the lower the heat is. As an example, when the heat threshold is 5, storage tables (e.g., storage table 1 with a heat of 3, storage table 4 with a heat of 1, storage table 7 with a heat of 0, etc.) of a plurality of storage tables with a heat of less than 5 may be determined as the first storage tables. A hotter storage table may refer to a storage table that is accessed more frequently, and a cooler storage table may refer to a storage table that is accessed less frequently.

In an example embodiment of the present disclosure, the proximity refers to a degree of proximity or similarity between the storage table and the first storage table, and the first proximity threshold is a threshold for determining whether a proximity satisfies the condition of being determined as the second storage table. As an example, when the first proximity threshold is 85%, a storage table having a degree of proximity to the first storage table greater than 85% (e.g., storage table 3 having a degree of proximity to the first storage table of 90%) is determined as the second storage table.

In the present disclosure, all the storage tables may be categorized into n (e.g., but not limited to, 3) layers according to the access frequencies of the storage tables, which may be a base variable for approximate replacement. A Euclidean distance between each storage table of an m-th layer and each storage table of an (m+1)-th layer (m=[0,n)) may be computed, and the storage table that is closest to the current storage table may be its proximate storage table (e.g., its approximate storage table). In the present disclosure, the following settings may be made: a Euclidean distance between the current storage table and the proximate storage table may be less than a given threshold; a layer number of the proximate storage table may be less than a layer number of the current storage table; and not every storage table may have a proximate storage table. In the present disclosure, any method may be used to calculate the Euclidean distance between two storage tables, and the present disclosure is not limited thereto.

In an example embodiment of the present disclosure, the prefetching of the second storage table to replace the first storage table may include: prefetching the second storage table, based on a current storage table replacement rate being less than a replacement rate threshold. In an example embodiment of the present disclosure, the prefetching of the storage table from the memory device based on the plurality of storage tables may further include: determining not to perform a storage table replacement operation, and prefetching the first storage table, based on the current storage table replacement rate being greater than or equal to the replacement rate threshold. Herein, in order to avoid the approximate replacement over-influence the performance of the DLRM, n% of the storage tables will be kept from being replaced at one time, thereby preserving the generalization ability of the DLRM as much as possible.

In an example embodiment of the present disclosure, the prefetching of the storage table from the memory device based on the plurality of storage tables may include: based on determining that there exists, a proximate storage table is included in in storage tables that have been transferred into the first processor (e.g., GPU), wherein the proximate storage table has a proximity to a third storage table from among the plurality of storage tables that is greater than or equal to a second proximity threshold, determining not to prefetch the third storage table and determining to use the proximate storage table in the first processor to replace the third storage table. Herein, when a storage table similar to the current storage table is already in the first processor (e.g., GPU) (e.g., already loaded or stored in the first processor), it can be used to replace the current storage table, and there is no need to transmit the current storage table to the first processor (e.g., GPU) again, which resulting in a significant reduction in the number of storage tables being transmitted to the first processor (e.g., GPU), thereby enabling the training time of the DLRM overlaps with the transmission time of the storage tables.

In an example embodiment of the present disclosure, the determining of not to prefetch the third storage table may include: determining not to prefetch the third storage table, based on a current storage table replacement rate being less than a replacement rate threshold. In an example embodiment of the present disclosure, the prefetching of the storage table from the memory device based on the plurality of storage tables may further include: determining not to perform a storage table replacement operation and prefetching the third storage table, based on the current storage table replacement rate being greater than or equal to the replacement rate threshold. Herein, while keeping n% of the storage tables from being replaced at one time, a storage table similar to the current storage table may be used to replace the current storage table when it is already loaded or stored in the first processor (e.g., GPU), thereby preserving as much of the generalization capability of the DLRM as possible while reducing the number of storage tables transmitted to the first processor (e.g., GPU).

At operation S112, in response to the storage table being prefetched, the prefetched storage table is transferred to the first processor.

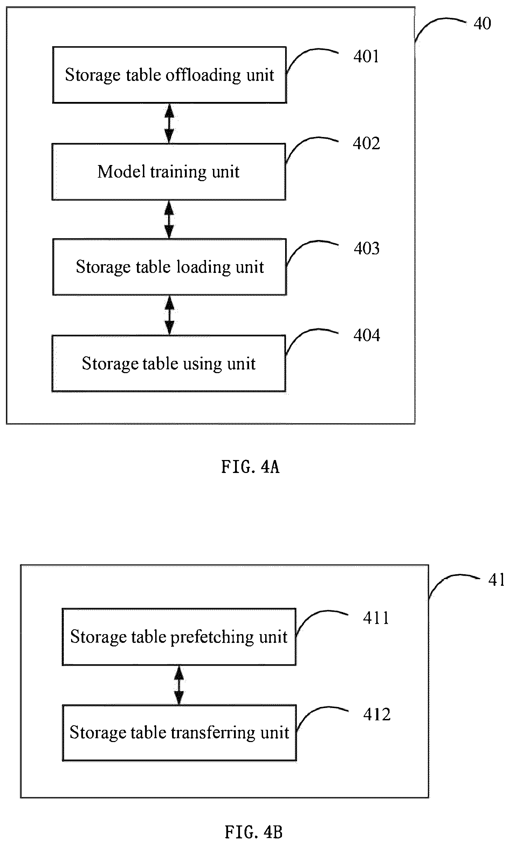

The method of training a DLRM according to an example embodiment of the present disclosure has been described above in conjunction with FIG.1A~FIG.3. Hereinafter, the device for training a DLRM and the units thereof according to an example embodiment of the present disclosure will be described with reference to FIG. 4A ~FIG.5.

FIG. 4A illustrates a block diagram of a device for training a DLRM according to an example embodiment of the present disclosure.

Referring to FIG. 4A, the device 40 for training a DLRM may include a storage table offloading unit 401, a model training unit 402, a storage table loading unit 403, and a storage table update unit 404.

The storage table offloading unit 401 may be configured to offload storage tables to a memory device. Herein, after a DLRM initializes storage tables, the storage tables may be offloaded from the first processor to a memory device. Herein, training data may be loaded into the DLRM located in the first processor (e.g., GPU), before the training of the DLRM. The loading of the training data into the DLRM located in the first processor (e.g., GPU) may mean that the DLRM is to be trained based on the training data. Based on this, the storage tables may be offloaded to the memory device by the storage table offloading unit 401.

In an example embodiment of the present disclosure, the memory device may include a CMM-D, and a storage table may include an embedding table.

The model training unit 402 may be configured to train the DLRM based on training data.

The storage table loading unit 403 may be configured to load a storage table prefetched from the memory device according to a training phase, during the training of the DLRM.

In an example embodiment of the present disclosure, the storage table loading unit 403 may be configured to load the prefetched storage table based on determining that the second processor has prefetched the storage table from the memory device according to the training phases.

The storage table update unit 404 may be configured to store feature data during the training into the loaded storage table.

FIG. 4B illustrates a block diagram of a device for training a DLRM according to an example embodiment of the present disclosure.

Referring to FIG. 4B, the device 41 for training the DLRM includes a storage table prefetching unit 411 and a storage table transferring unit 412.

The storage table prefetching unit 411 is configured to prefetch a storage table from a memory device according to a training phase of training, by a first processor, of the DLRM, for storing feature data during the training.

In an example embodiment of the present disclosure, the storage table prefetching unit 411 may be configured to: prefetch the storage table that will be used in a next training phase of a current training phase from the memory device.

In an example embodiment of the present disclosure, the storage table prefetching unit 411 may be configured to: perform parallel lookup in the memory device for a plurality of storage tables that will be used in the next training phase; and prefetch the storage table from the memory device based on the plurality of storage tables.

In an example embodiment of the present disclosure, the storage table prefetching unit 411 may be configured to: select or determine corresponding data that will be used in the next training phase in the training data; and perform the parallel lookup in the memory device for each of the plurality of storage tables, based on at least a portion of the corresponding data.

In an example embodiment of the present disclosure, the storage table prefetching unit 411 may be configured to: select or determine a first storage table having a heat that is less than a heat threshold in the plurality of storage tables; select or determine a second storage table having a proximity to the first storage table that is greater than or equal to a first proximity threshold; and prefetch the second storage table to replace the first storage table, based on the second storage table having a heat greater than or equal to the heat threshold. In an example embodiment of the present disclosure, the heat indicates an access frequency of a storage table, and the heat threshold indicates a threshold for the access frequency of the storage table. In an example embodiment of the present disclosure, the proximity refers to a degree of proximity or similarity between the storage table and the first storage table, and the first proximity threshold is a threshold for determining whether a proximity satisfies the condition of being determined as the second storage table.

In an example embodiment of the present disclosure, the storage table prefetching unit 411 may be configured to: prefetch the second storage table, based on a current storage table replacement rate being less than a replacement rate threshold; and determine not to perform a storage table replacement operation, and prefetch the first storage table, based on the current storage table replacement rate being greater than or equal to the replacement rate threshold.

In an example embodiment of the present disclosure, the storage table prefetching unit 411 may be configured to: based on determining that a proximate storage table is included in storage tables that have been transferred into the first processor, wherein the proximate storage table has a proximity to a third storage table from among the plurality of storage tables which is greater than or equal to a second proximity threshold, determine not to prefetch the third storage table and determine to use the proximate storage table in the first processor to replace the third storage table.

In an example embodiment of the present disclosure, the storage table prefetching unit 411 may be configured to: determine not to prefetch the third storage table, based on a current storage table replacement rate being less than a replacement rate threshold; and determine not to perform a storage table replacement operation and prefetch the third storage table, based on the current storage table replacement rate being greater than or equal to the replacement rate threshold.

The storage table transferring unit 412 is configured to, based on the storage table being prefetched, transfer the prefetched storage table to the first processor.

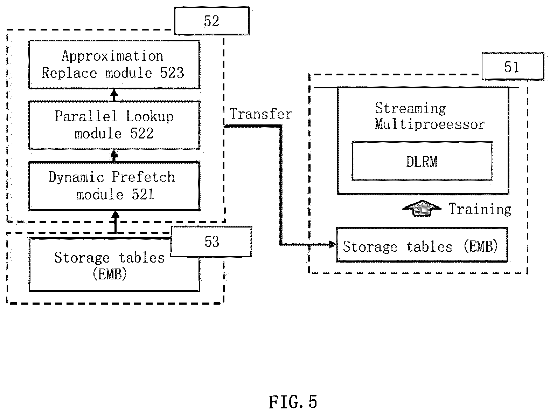

FIG. 5 illustrates a schematic diagram of a system for training a DLRM according to an example embodiment of the present disclosure.

Referring to FIG. 5, the system for training a DLRM includes a first processor 51 (e.g., a GPU), a second processor 52 (e.g., a CPU), and a memory device 53 (e.g., a CMM-D).

The first processor 51 may be configured to offload storage tables to the memory device 53, train a DLRM based on training data, and load a storage table prefetched from the memory device 53 according to a training phase, during the training of the DLRM.

The second processor 52 may be configured to prefetch a storage table from the memory device 53 according to a training phase associated with training, by a first processor, of the DLRM, wherein the storage table may be used to store feature data during the training, and based on the storage table being prefetched, transfer the prefetched storage table to the first processor.

The first processor 51 may be further configured to store feature data during the training into the loaded storage table.

In an example embodiment of the present disclosure, the first processor 51 may be a GPU, and the second processor 52 may be a CPU.

In an example embodiment of the present disclosure, the memory device 53 may include a CMM-D, and a storage table may include an embedding table.

In addition, the second processor 52 may include a dynamic prefetch module 521, a parallel lookup module 522, and an approximation replace module 523.

In an example embodiment of the present disclosure, the dynamic prefetch module 521 may be configured to prefetch the storage table from the memory device 53 according to a training phase, thereby reducing the training time.

In an example embodiment of the present disclosure, the dynamic prefetch module 521 may be configured to: prefetch the storage table that will be used in a next training phase of a current training phase from the memory device 53. Herein, by prefetching the storage table that will be used in the next training phase of the current training phase, almost no waiting may occur between the main process and the prefetching process, such that the training time of the DLRM overlaps with the transmission time of the storage table, and the training progress of the DLRM in the GPU is not slowed down.

In an example embodiment of the present disclosure, the parallel lookup module 522 may be configured to: perform parallel lookup in the memory device 53 for a plurality of storage tables that will be used in the next training phase; and prefetch the storage table from the memory device 53 based on the plurality of storage tables. Herein, by performing a parallel lookup operation, the time for performing the lookup operation may be saved, thereby overlapping the training time of the DLRM with the transmission time of the storage table.

In an example embodiment of the present disclosure, the parallel lookup module 522 may be configured to: select or determine corresponding data that will be used in the next training phase in the training data; perform the parallel lookup in the memory device 53 for each of the plurality of storage tables, based on at least a portion of the corresponding data.

In an example embodiment of the present disclosure, the approximation replace module 523 may be configured to: select or determine a first storage table having a heat less than a heat threshold in the plurality of storage tables; select or determine a second storage table having a proximity to the first storage table greater than or equal to a first proximity threshold; prefetch the second storage table to replace the first storage table, based on the second storage table having a heat greater than or equal to the heat threshold. Herein, a hotter storage table may be used to replace a colder storage table, thereby the colder storage table does not need to be transmitted. In an example embodiment of the present disclosure, the heat indicates an access frequency of a storage table, and the heat threshold indicates a threshold for the access frequency of the storage table. In an example embodiment of the present disclosure, the proximity refers to a degree of proximity or similarity between the storage table and the first storage table, and the first proximity threshold is a threshold for determining whether a proximity satisfies the condition of being determined as the second storage table.

In an example embodiment of the present disclosure, the approximation replace module 523 may be configured to: prefetch the second storage table, based on a current storage table replacement rate being less than a replacement rate threshold; determine not to perform a storage table replacement operation, and prefetch the first storage table, based on the current storage table replacement rate being greater than or equal to the replacement rate threshold. Herein, in order to avoid the approximate replacement from over-influencing the performance of the DLRM too much, n% of the storage tables may be kept from being replaced at one time, thereby preserving the generalization ability of the DLRM as much as possible.

In an example embodiment of the present disclosure, the approximation replace module 523 may be configured to: based on determining that a proximate storage table is included in storage tables that have been transferred into the first processor, wherein the proximate storage table has a proximity to a third storage table in the plurality of storage tables which is greater than or equal to a second proximity threshold, determine not to prefetch the third storage table and determine to use the proximate storage table in the first processor to replace the third storage table. Herein, when a storage table similar to the current storage table is already loaded or stored in the first processor, it can be used to replace the current storage table, and there is no need to transmit the current storage table to the first processor again, resulting in a significant reduction in the number of storage tables being transmitted to the first processor, thereby enabling the training time of the DLRM overlaps with the transmission time of the storage table.

In an example embodiment of the present disclosure, the approximation replace module 523 may be configured to: determine not to prefetch the third storage table, based on a current storage table replacement rate being less than a replacement rate threshold; determine not to perform a storage table replacement operation and prefetch the third storage table, based on the current storage table replacement rate being greater than or equal to the replacement rate threshold. Herein, while keeping n% of the storage tables from being replaced at one time, a storage table similar to the current storage table may be used to replace the current storage table when it is already loaded or stored in the GPU, thereby preserving as much of the generalization capability of the DLRM as possible while reducing the number of storage tables transmitted to the GPU.

In addition, according to the example embodiments of the present disclosure, there is also provided a computer-readable storage medium having a computer program stored thereon, and when the computer program is executed, a method of training a DLRM according to the example embodiments of the present disclosure is implemented.

In the example embodiments of the present disclosure, the computer-readable storage medium may carry one or more programs that, when executed, may implement the operations of offloading storage tables to a memory device 53; training a DLRM based on training data, wherein during the training of the DLRM, a storage table prefetched from the memory device 53 is loaded according to a training phase; and storing feature data during the training into the loaded storage table, thereby making the training time overlap with the transmission time by the prefetching of the storage table. Thus, the training time may be reduced, and then the training efficiency may be improved.

In the example embodiments of the present disclosure, the computer-readable storage medium may carry or store one or more programs that, when executed, may implement the operations of prefetching a storage table from a memory device 53 according to a training phase of training, by a first processor, of the DLRM, for storing feature data during the training; in response to the storage table being prefetched, transferring the prefetched storage table to the first processor, thereby enabling the prefetching of the storage table, and thus the training time may be reduced.

The computer-readable storage medium may be, for example, but is not limited to, an electrical, magnetic, optical, electromagnetic, infrared, or semiconductor system, apparatus or device, or any combination of the above. More specific examples of computer-readable storage medium may include, but are not limited to: electrical connections with one or more wires, portable computer disks, hard disks, random access memory (RAM), read only memory (ROM), erasable programmable read only memory (EPROM or flash memory), optical fiber, portable compact disk read only memory (CD-ROM), optical storage devices, magnetic storage devices, or any suitable combination of the above. In the embodiments of the present disclosure, a computer-readable storage medium may be any tangible medium that contains or stores a computer program that can be used by or in conjunction with an instruction execution system, apparatus, or device. The computer program contained on the computer-readable storage medium may be transmitted using any appropriate medium, including but not limited to: wire, fiber optic cable, radio frequency (RF), etc., or any suitable combination of the above. The computer-readable storage medium may be included in any device, or it may also exist as a standalone medium without being incorporated into the device.

In addition, according to example embodiments of the present disclosure, there is also provided a computer program product, wherein instructions in the computer program product can be executed by a processor of the computer device to implement the method of training a DLRM according to the example embodiments of the present disclosure.

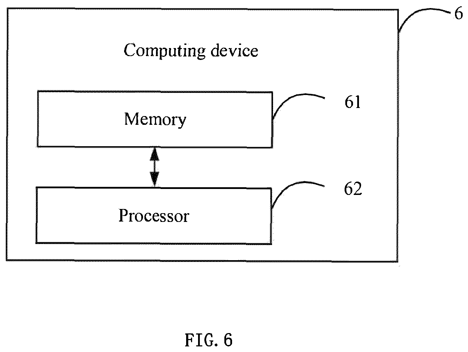

The method of training a DLRM according to the example embodiments of the present disclosure has been described above in conjunction with FIG. 4 and FIG. 5. Next, a computing device according to the example embodiment of the present disclosure is described in conjunction with to FIG. 6.

FIG. 6 shows a schematic diagram of the computing device according to an example embodiment of the present disclosure.

Referring to FIG. 6, the computing device 6 may include a memory 61 and a processor 62, and the memory 61 stores a computer program. When the computer program is executed by the processor 62, a method of training a DLRM according to the example embodiments of the present disclosure is implemented.

In the example embodiments of the present disclosure, when the computer program is executed by the processor 62, it may implement the steps of offloading storage tables to a memory device; training a DLRM based on training data, wherein during the training of the DLRM, a storage table prefetched from the memory device is loaded according to a training phase; and storing feature data during the training into the loaded storage table, thereby making a training time overlap with a transmission time by the prefetching of the storage table, thus the training time is reduced, and then a training efficiency is improved.

In the example embodiments of the present disclosure, when the computer program is executed by the processor 62, it may implement the following steps of prefetching a storage table from a memory device according to a training phase of training, by a first processor, of the DLRM, for storing feature data during the training; in response to the storage table being prefetched, transferring the prefetched storage table to the first processor, thereby enabling the prefetching of the storage table, and thus the training time is reduced.

The computing devices in embodiments of the present disclosure may include, but are not limited to, devices such as mobile phones, notebook computers, personal digital assistants (PDAs), tablet computers, desktop computers, and the like. The computing device shown in FIG. 6 is only an example, and should not impose any limitation on the function and scope of use of the embodiments of the present disclosure.

The method and device for training a DLRM according to the example embodiments of the present disclosure have been described above with reference to FIG. 1 to FIG. 6. However, it should be understood that the device for training a DLRM and the units thereof shown in FIG. 4 to FIG. 5 may be respectively configured with software, hardware, firmware or any combination of the above to perform specific functions, and the computing device shown in FIG. 6 is not limited to include the above shown components, but some components may be added or deleted according to needs, and the above components may also be combined.

The method and device for training a DLRM according to an example embodiment of the present disclosure, may include offloading storage tables to a memory device, training a DLRM based on training data, wherein during the training of the DLRM, a storage table prefetched from the memory device is loaded according to a training phase, and storing feature data during the training into the loaded storage table, thereby making the training time overlap with the transmission time by the prefetching of the storage table, thus the training time may be reduced, and thereby a training efficiency may be improved.

The method and device for training a DLRM according to an example embodiment of the present disclosure, may include prefetching a storage table from a memory device according to a training phase of training, by a first processor, of the DLRM, for storing feature data during the training; in response to the storage table being prefetched, transferring the prefetched storage table to the first processor, thereby enabling the prefetching of the storage table, and thus the training time may be reduced.

Although some embodiments of the present disclosure are specifically shown and described with reference to the example embodiments thereof, those skilled in the art should understand that various changes of the forms and details can be made without departing from the scope of the appended claims.

## Claims

1. A method for training a deep learning recommendation model, DLRM, the method being performed by a first processor (51), and comprising:
offloading (S101) one or more storage tables to a memory device (53);
training (S102) a DLRM based on training data, wherein during the training, a storage table prefetched from the memory device (53) is loaded according to a training phase; and
storing (S103) feature data obtained during the training into the loaded storage table.

2. The method according to claim 1, wherein the memory device (53) comprises a Compute Express Link memory module based dynamic random access memory, CMM-D, and
wherein the storage table comprises an embedding table.

3. The method according to claim 1 or 2, wherein the prefetched storage table is loaded based on determining that a second processor (52) has prefetched the storage table from the memory device (53) according to the training phase.

4. A method for training a deep learning recommendation model, DLRM, the method being performed by a second processor (52), and comprising:
prefetching (S111) a storage table from a memory device (53) according to a training phase associated with training of a DLRM by a first processor (51), wherein the storage table is configured to store feature data obtained during the training; and
based on the storage table being prefetched, transferring (S112) the prefetched storage table to the first processor (51).

5. The method according to claim 4, wherein the storage table corresponds to a next training phase that is subsequent to a current training phase.

6. The method according to claim 5, wherein the prefetching (S111) of the storage table comprises:
performing a parallel lookup in the memory device (53) for a plurality of storage tables that correspond to the next training phase; and
prefetching the storage table from the memory device (53) based on the plurality of storage tables.

7. The method according to claim 6, wherein the performing of the parallel lookup comprises:
selecting corresponding data that correspond to the next training phase in training data for training the DLRM;
performing the parallel lookup in the memory device (53) for each of the plurality of storage tables, based on at least a portion of the corresponding data.

8. The method according to claim 6 or 7, wherein the prefetching (S111) of the storage table comprises:
selecting a first storage table from among the plurality of storage tables, wherein a heat associated with the first storage table is less than a heat threshold;
selecting a second storage table having a proximity to the first storage table that is greater than or equal to a first proximity threshold;
based on a heat associated with the second storage table being greater than or equal to the heat threshold, prefetching the second storage table to replace the first storage table.

9. The method according to claim 8, wherein the second storage table is prefetched based on a current storage table replacement rate being less than a replacement rate threshold, and
wherein the prefetching of the storage table further comprises: based on the current storage table replacement rate being greater than or equal to the replacement rate threshold, determining not to perform a storage table replacement operation and prefetching the first storage table.

10. The method according to any one of claims 6 to 9, wherein the prefetching of the storage table comprises:
based on determining that a proximate storage table has been transferred into the first processor, wherein the proximate storage table has a proximity to a third storage table from among the plurality of storage tables which is greater than or equal to a second proximity threshold, determining not to prefetch the third storage table and determining to use the proximate storage table to replace the third storage table.

11. The method according to claim 10, wherein the determining not to prefetch the third storage table comprises: determining not to prefetch the third storage table, based on a current storage table replacement rate being less than a replacement rate threshold,
wherein the prefetching of the storage table further comprises: determining not to perform a storage table replacement operation and prefetching the third storage table, based on the current storage table replacement rate being greater than or equal to the replacement rate threshold.

12. A system for training a deep learning recommendation model, DLRM, the system comprising:
a memory device (53);
a first processor (51) configured to:
offload one or more storage tables to the memory device (53),
train a DLRM based on training data, and
load a storage table prefetched from the memory device (53) according to a training phase, during the training of the DLRM; and
a second processor configured to:
prefetch the storage table from the memory device (53) according to the training phase, and
based on the storage table being prefetched, transfer the prefetched storage table to the first processor (51),
wherein the first processor (51) is further configured to store feature data obtained during the training into the loaded storage table.

13. The system according to claim 12, wherein the first processor (51) comprises a graphics processing unit, GPU, and
wherein the second processor (52) comprises a central processing unit, CPU.

14. The system according to claim 12 or 13, wherein the memory device (53) comprises a Compute Express Link memory module based dynamic random access memory, CMM-D, and
wherein the storage table comprises an embedding table.

15. The system according to any one of claims 12 to 14, wherein the storage table corresponds to a next training phase that is subsequent to a current training phase.
